# EUROPEAN PATENT APPLICATION

(11) **EP 1 965 476 A1**
(43) Date of publication of application: **03.09.2008**
(21) Application number: 07103278.3
(22) Date of filing: 01.03.2007
(51) Int. Cl.: H02B 13/02

(54) **Combined breaker and disconnector assembly in fixed type electrical switchgear**

(71) Applicant: Eaton Electric B.V., 7559 SC Hengelo (NL)
(72) Inventor: Lammers, Arend Jan Willem, 7558 TV Hengelo (NL); Schoonenberg, Gerard Cornelis, 7559 CR Hengelo (NL); Van Thiel, Johannes Josephus Gerardus, 7451 GH Holten (NL); Van Dijk, Marcel Berend Paul, 7541 CH Enschede (NL); Leccia, Robert, Allegheny, PA 15102 (US); Schoten, Frederik Paul, 7443 TS Nijverdal (NL)
(74) Representative: Hutter, Jacobus Johannes

(57) **Abstract**

Combined breaker and disconnector assembly (10) for an electrical switchgear (1), comprising a breaker (11), a first contact body (12) connected to one end of the breaker (11), and a second contact body (13) connected to another end of the breaker (11). The first contact body (12) can make a disconnectable electrical contact with a primary contact terminal (3) of the electrical switchgear (1), and the second contact body (13) can make a fixed electrical contact with a secondary contact terminal (4) of the electrical switchgear (1). By pivoting the assembly (10) the disconnecting function is executed.

## Description

### Field of the invention

The present invention relates to a combined breaker (circuit breaker or load break switch) and disconnector assembly for an electrical switchgear, comprising a breaker, a first contact body connected to one end of the breaker, and a second contact body connected to another end of the breaker. In a further aspect, the present invention relates to an electrical switchgear comprising such a combined assembly.

### Prior art

American patent publication US6,232,571 discloses a medium voltage circuit breaker and disconnector module, in which disconnection is performed by tilting or rotating the set of poles of the module away from an in-service position. In operation, the poles of the module are simultaneously connected to bushings in the switchgear. The accessibility of each of the three phases of this system is poor.

International patent publications WO98/07222 and WO98/07223 disclose a switch installation, in which a circuit breaker or switch is installed on a withdrawable part of the installation. The switch contains a pole unit and a switch drive and the disconnecting function is ensured by driving the complete switch or by rotating the pole unit relatively to the switch drive,

German patent publication DE-A-199 36 986 discloses an electrical switch assembly having a switch module comprising a circuit breaker and a disconnector combined in a pole module. The pole module can be shifted with a linear movement to disconnect both poles simultaneously, and after that the entire module may be tilted to enlarge the distance between disconnected primary components.

### Summary of the invention

The present invention seeks to provide an improved breaker assembly for an electrical switchgear, both in terms of operational, maintenance and availability aspects.

According to the present invention, a combined breaker and disconnector assembly according to the preamble defined above is provided, in which the first contact body is arranged to make a disconnectable electrical contact with a primary contact terminal of the electrical switchgear, and the second contact body is arranged to make a fixed electrical contact with a secondary contact terminal of the electrical switchgear. This embodiment combines the advantages of both a fixed breaker system and a withdrawable breaker system. Furthermore, the assembly also functions effectively as disconnector (by pivoting the assembly), thereby eliminating the need for a separate disconnector unit.

In a further embodiment, the assembly further comprises a mounting element for pivotally mounting the assembly in the electrical switchgear, in which the mounting element is part of the second contact body. Even though the mounting element is fixed in the electrical switchgear during operation, it is still easy to disassemble, e.g. in case access is needed. The mounting element is (quickly) dismountable from the electrical switchgear in a further embodiment, e.g. using a single bolt attachment, for ease of disassembling. This allows quickly installing and de-installing the assembly.

In a further embodiment, the assembly is operable by an actuator body attached to the second contact body. The actuator body may be operated by hand or by an actuator drive, and only needs to perform a rotary actuation, thus allowing a simple design implementation of the actuator body.

The first contact body and the primary contact terminal may form a sliding contact pair in a further embodiment. This allows a good and reliable contact for the disconnector function of the assembly.

Although the mounting element may be used for the electrical contact between the second contact body and the secondary contact terminal, in a further embodiment, the assembly comprises a flexible conductor (e.g. a Litze wire) connected to the second contact body for making electrical contact between the second contact body and the secondary contact terminal of the electrical switchgear. This embodiment provides an even more reliable electrical contact, and also allows rotation of the assembly.

As the mounting element forms a fixed connection to the secondary contact terminal, the temperature rise is allowed to be higher than in conventional withdrawable systems according to the international standards.

In a further aspect, the present invention relates to an electrical switchgear comprising a primary contact terminal and a secondary contact terminal,
in which a combined breaker and disconnector assembly according to an embodiment of the present invention is pivotably mountable on the secondary contact terminal, such that the first contact body of the assembly is rotatable into contact with the primary contact terminal. This allows connecting and disconnecting the electrical circuit from the conductive terminal of the primary side to the conductive terminal of the secondary side, and no separate disconnector is needed.

In a further embodiment, the electrical switchgear comprises a ground contact terminal, the combined breaker and disconnector being further arranged to rotate the first contact body into contact with the ground contact terminal. This allows for a three position operation of the disconnector function of the assembly, i.e. in service, disconnected, or grounded.

The combined breaker and disconnector assembly pivots in a plane perpendicular to the front side of a cabinet associated with the switchgear in a further embodiment. The physical plane may also be considered to be the side plane of the associated cabinet of the switchgear. This structure allows a compact build of the installation, yet allows easy access from a front panel of the installation.

In an even further embodiment, the electrical switchgear comprises a three phase system, and for each phase a combined breaker and disconnector assembly, in which the assemblies are operable (i.e. rotatable) by a common actuator body. This provides a very compact installation in a three phase embodiment which is widely useable, and also provides a good accessibility to the elements inside the installation.

### Short description of drawings

The present invention will be discussed in more detail below, using a number of exemplary embodiments, with reference to the attached drawings, in which
Fig. 1a and b show a front view, respectively a side view of an embodiment of a functional unit of the electrical switchgear according to the present invention;
Fig. 2 shows a side view of a combined breaker and disconnector assembly according to an embodiment of the present invention; and
Fig. 3 shows a side view of a further embodiment of the functional unit of the electrical switchgear according to the present invention.

### Detailed description of exemplary embodiments

Electrical installations, such as switchgear are applied in a wide variety of possible constructions. Normally, such a switchgear comprises a number of elements, such as circuit breakers or load break switches for making and breaking an electrical circuit under load, and disconnectors for isolating a part of the installation under zero load current.

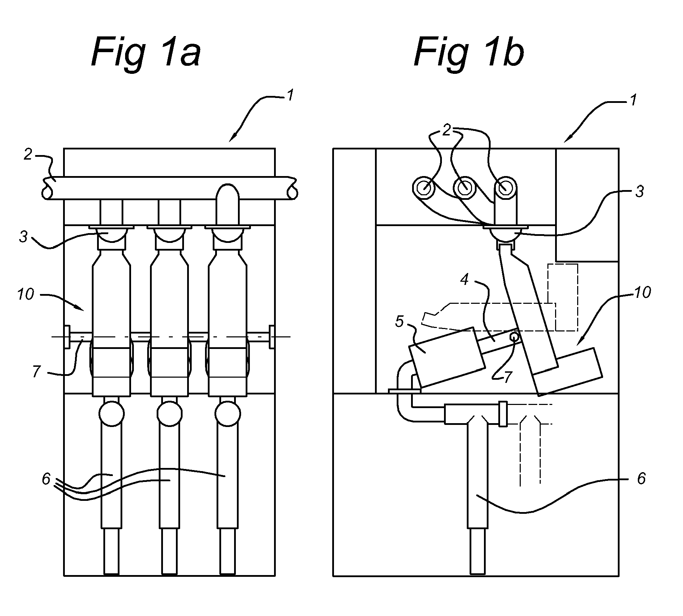

Fig. 1a shows a front view of a functional unit of a medium voltage electrical switchgear 1 according to an embodiment of the present invention, with the front panels removed from the cabinet to show the internal elements. Fig. 1b shows a side view of the functional unit 1 of Fig. 1a, showing the elements in the cabinet from the side.

As an example in the top part of the functional unit 1, conductive rails or busbars 2 form the backbone of a combination of functional units 1 positioned side by side. The conductive busbars 2 (e.g. three in case of a three phase system) are provided with a primary contact terminal 3, co-operating with a combined breaker and disconnector assembly 10 according to an embodiment of the present invention. In this example on the bottom side of the functional unit 1, cable terminations 6 are provided, which are e.g. routed to a load, such as an electrical motor or industrial installation. As shown in the side view of Fig. 1b, the cable termination 6 is connected to a conductor routed to a secondary contact terminal 4 of the functional unit 1. This conductor may further be fitted with measuring equipment, such as a current transformer 5. Also, a voltage transformer or other measuring devices may be provided. The combined breaker and disconnector assembly 10 is arranged to provide a switchable electrical contact between the primary contact terminal 3 and the secondary contact terminal 4.

In known electrical installations a distinction can be made between a fixed system and a withdrawable system. Fixed systems have a built-in, non-withdrawable main switching device (often a circuit breaker or load break switch) which can be mounted in a more compact and less elaborate compartment of the installation than a withdrawable system. The mechanism of the main switching device can be placed in an user accessible (LV) compartment. A withdrawable system comprises additional constructional features for allowing the driving in and out of the main switching device. A withdrawable system allows exchange of or direct access to the main switching device in a short time in case maintenance is needed. Furthermore, as the entire main switching device may be withdrawn or removed, the other elements in the functional unit, such as cable connection points, transformers and the like, may become easier accessible.

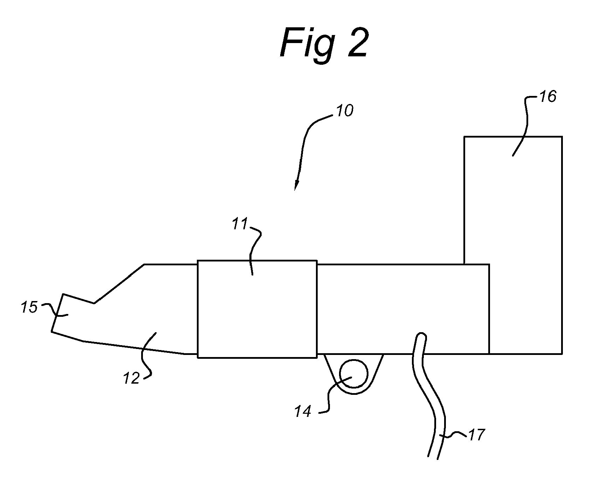

In Fig. 1b, it is shown that the assembly 10 is pivotally attached to the secondary contact terminal 4. The three assemblies 10 in the functional unit 1 shown in Fig. 1 may be operated for the disconnecting function, using an actuator shaft (or actuator body) 7, which allows pivoting the assemblies 10 around the mounting axis indicated with a cross sign in Fig. 1b. The actuator body 7 may be operated manually or automatically using an actuator drive (not shown). In a first position shown, the assembly 10 is in electrical contact with the primary contact device 3, and in a second position shown, the assembly 10 is disconnected from the primary contact device 3. Thus, the assembly 10 functions both as main switching device (breaker 11) and as disconnector (using a first contact body 12, see Fig. 2, and primary contact device 3). A separate disconnector or disconnector unit is therefore not required.

The combined breaker and disconnector assembly 10 will now be further described in more detail with reference to the side view of the embodiment of the assembly 10 shown in Fig. 2. The assembly 10 comprises a breaker 11 (e.g. a vacuum interrupter) of which a first contact terminal is connected to a first contact body 12 and an opposite contact terminal is connected to a second contact body 13. The first contact body 12 is arranged to make a disconnectable contact with the primary contact terminal 3 of the functional unit 1, e.g. using a mesh (or knife-like) contact blade 15 which cooperates with the primary contact terminal 3 for making an electrical connection (i.e. forming a sliding contact pair). The assembly 10 further comprises a mounting element 14 for pivotally mounting the assembly 10 in the functional unit 1. The mounting element 14 is part of the second contact body 13, and e.g. comprises a mounting bracket which may be bolted to the secondary contact terminal 4 in a manner allowing pivoting motion of the assembly 10.

Electrical contact between the second contact terminal 4 and second contact body 13 may be provided by the mounting element 14 itself (e.g. when implemented as a metallic conductor). Alternatively, the assembly 10 may further comprise a flexible conductive wire 17, e.g. Litze wire, connected to the second contact body 13 (e.g. welded or screwed on), which allows to make a reliable electrical contact between the second contact body 13 and the secondary contact terminal 4, and still allows rotating movement of the assembly 10. The flexible wire 17 is also shown in Fig. 1a, in which embodiment two conducting wires 17 are provided for each assembly 10.

Furthermore, the use of a rotating, yet fixed, attachment of the assembly 10 to the secondary contact terminal 4 using the mounting element 14 allows to have a higher allowed temperature rise of 75 degrees, as compared to a maximum temperature rise of 65 degrees in currently known systems according the relevant international standards.

The assembly 10 further comprises a counterweight part 16 attached to the second contact body 13, to ease rotation of the assembly 10 around the pivot point formed by mounting element 14.

The breaker 11 may comprise an internal (electromechanical) actuator for making and braking contacts of the breaker 11. Alternatively, the actuator is an external part of the breaker 11, and may e.g. be included as the counterweight part 16 as shown in Fig. 2. In a three phase system, each breaker 11 may be actuated by its own actuator, or alternatively, a single actuator drives all three breakers 11.

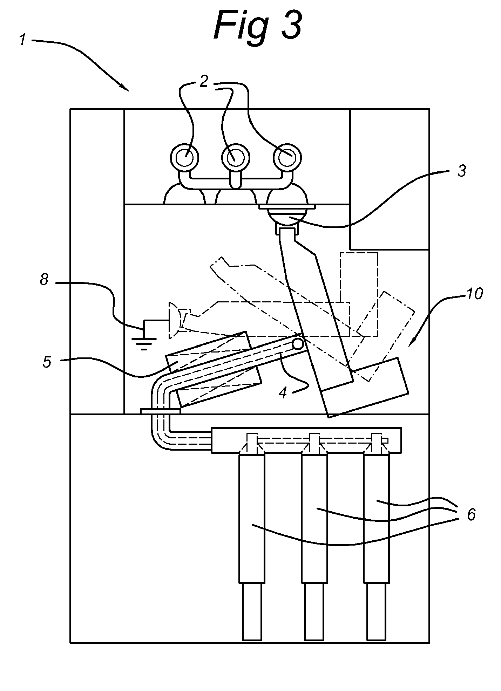

In Fig. 3 a side view is shown of a further embodiment of the electrical installation according to the present invention. In this embodiment, the installation is further provided with a ground contact terminal 8 for each of the assemblies 10. The assembly 10 can be rotated around the pivot axis in one of three positions, i.e. in contact, open, or grounded position.

The embodiments of the present invention as described above, allow to build a relatively compact electrical switch gear, as no additional structural features are required for drawing in or out the main switching device, as in known withdrawable systems. This is further enhanced by designing the electrical installation in a manner allowing the three assemblies 10 to rotate in parallel to each other, in the same plane perpendicular to the front plane of the electrical installation 1, using a single actuator driving the actuator shaft 7 connected to each of the assemblies 10 as described above. The plane of rotation of the assemblies 10 (i.e. the plane of drawing in Fig. 1b and 3)is perpendicular to the front face of the functional unit 1 (i.e. the plane of drawing of Fig. 1a), and thus requires minimal frontal surface for a three phase installation 1.

## Claims

1. Combined breaker and disconnector assembly (10) for an electrical switchgear (1), comprising
a breaker (11),
a first contact body (12) connected to one end of the breaker (11), and a second contact body (13) connected to another end of the breaker (11),
the first contact body (12) being arranged to make a disconnectable electrical contact with a primary contact terminal (3) of the electrical switchgear (1), and the second contact body (13) being arranged to make a fixed electrical contact with a secondary contact terminal (4) of the electrical switchgear (1).

2. Combined breaker and disconnector assembly according to claim 1, the assembly (10) further comprising a mounting element (14) for pivotally mounting the assembly (10) in the electrical switchgear (1), in which the mounting element (14) is part of the second contact body (13).

3. Combined breaker and disconnector assembly according to claim 2, in which the mounting element (14) is dismountable from the electrical switchgear (1).

4. Combined breaker and disconnector assembly according to claim 1, 2 or 3, in which the assembly (10) is operable by an actuator body (7) attached to the second contact body (13).

5. Combined breaker and disconnector assembly according to any one of claims 1-4, in which the first contact body (12) and the primary contact terminal (3) form a sliding contact pair.

6. Combined breaker and disconnector assembly according to any one of claims 1-5, further comprising a flexible conductor (17) connected to the second contact body (13) for making electrical contact between the second contact body (13) and the secondary contact terminal (4) of the electrical switchgear (1).

7. Electrical switchgear (1) comprising a primary contact terminal (3) and a secondary contact terminal (4), and a combined breaker and disconnector assembly (10) according to any one of claims 1-5, which is pivotably mounted on the secondary contact terminal (4), such that the first contact body (12) of the assembly is rotatable into contact with the primary contact terminal (3).

8. Electrical switchgear according to claim 7, further comprising a ground contact terminal (8), the combined breaker and disconnector assembly (10) being further arranged to rotate the first contact body (12) into contact with the ground contact terminal.

9. Electrical switchgear according to claim 7 or 8, in which the combined breaker and disconnector assembly (10) pivots in a plane perpendicular to a front side of a cabinet associated with the electrical switchgear (1).

10. Electrical switchgear according to claim 7, 8 or 9, comprising a three phase system, and for each phase a combined breaker and disconnector assembly (10), in which the assemblies (10) are operable by a common actuator body (7).
